# EUROPEAN PATENT APPLICATION

(11) **EP 3 418 910 A1**
(43) Date of publication of application: **26.12.2018**
(21) Application number: 17773052.0
(22) Date of filing: 16.03.2017
(51) Int. Cl.: G06F 17/30

(54) **BIG DATA-BASED METHOD AND DEVICE FOR CALCULATING RELATIONSHIP BETWEEN DEVELOPMENT OBJECTS**

(30) Priority: 28.03.2016 CN 201610183199
(71) Applicant: Alibaba Group Holding Limited, Grand Cayman (KY)
(72) Inventor: LI, Haolong, Hangzhou Zhejiang 311121 (CN)
(74) Representative: Branderhorst, Matthijs Pieter Arie
(86) International application number: PCT/CN2017/076892
(87) International publication number: WO 2017/167022

(57) **Abstract**

The present invention discloses a big data-based method and device for determining a relationship between development objects, and relates to the field of data management, to resolve a problem of obtaining a relationship between data development objects through analysis in a large-scale complex data scenario. The method in the present invention includes: determining whether there is a lineage relationship between data tables, where the lineage relationship is a data generation relationship of directly generating another one of the data tables based on one of the data tables; if there is a lineage relationship between the data tables, obtaining development object information corresponding to each of the data tables; and establishing an association relationship between the development object information. The present invention is mainly applied to sort out a relationship between development objects of enterprise data.

## Description

### TECHNICAL FIELD

The present invention relates to the field of data management, and in particular, to a big data-based method and device for determining a relationship between development objects.

### BACKGROUND

As the big data era opens, enterprise data volume rapidly increases year by year. In the massive data, there are countless relationships among data, generating data lineage. Data lineage means that if data A is generated based on data B, there is an actual lineage relationship between the data B and the data A. As the enterprise data volume continues to increase, there are more development objects of enterprise data. Therefore, in application scenarios based on large-scale complex data, it becomes more difficult to learn the relationship strength between development objects and the dependence between the development objects.

In existing technologies, there are analysis methods for interpersonal relationship networks and academic relationship networks. The analysis method for the interpersonal relationship networks is relationship network analysis based on communications information actually occurring between people, and is an iterative analysis on a restriction level based on collected telephone bill data. The method needs to rely on the communications information between people. When there is no communications information between people, the relationship between the development objects of the enterprise data cannot be obtained through analysis with respect to enterprise-data-oriented development objects. The analysis method for academic relationship networks is paper author-based analysis on a relationship network in the academic world, and is an analysis method based on an author relationship matrix. The method needs to rely on a name of an author. When there is no author's name, a relationship between the development objects of the enterprise data cannot be obtained through analysis with respect to enterprise-data-oriented development objects.

It may be learned from the above that the relationship between the development objects of the enterprise data has never been sorted out, and a status of the relationship between the development objects of the enterprise data is unknown. Therefore, how to research a relationship between development objects based on enterprise data becomes a problem to be urgently resolved in an enterprise data management process.

### SUMMARY

In view of this, the present invention provides a big data-based method and device for determining a relationship between development objects, to resolve the problem of obtaining a relationship between data development objects through analysis in a large-scale complex data scenario.

According to a first aspect of the present invention, the present invention provides a big data-based method for determining a relationship between development objects, including:
determining whether there is a lineage relationship between data tables, where the lineage relationship is a data generation relationship of directly generating another one of the data tables based on one of the data tables;
if there is a lineage relationship between the data tables, obtaining development object information corresponding to each of the data tables; and
establishing an association relationship between the development object information.

According to a second aspect of the present invention, the present invention provides a big data-based method for determining a relationship between development objects, including:
counting a number of times of mutually calling data tables between development objects in a preset time period, and denoting the number of times as a number of times of valid and bidirectional dependence;
counting a number of bytes of the mutually calling data tables, and denoting the number of bytes as a number of bytes of valid and bidirectional dependence;
calculating a dependence number-of-times score corresponding to the number of times of valid and bidirectional dependence based on a preset mapping table;
calculating a dependence number-of-bytes score corresponding to the number of bytes of valid and bidirectional dependence based on a preset calculation formula; and
adding the dependence number-of-times score to the dependence number-of-bytes score based on a preset weighting coefficient, to obtain a relationship index between the development objects, where the relationship index is used for representing a relationship strength between the development objects.

According to a third aspect of the present invention, the present invention provides a big data-based device for determining a relationship between development objects, including:
a determining unit, configured to determine whether there is a lineage relationship between data tables, where the lineage relationship is a data generation relationship of directly generating another one of the data tables based on one of the data tables;
an obtaining unit, configured to: when there is a lineage relationship between the data tables, obtain development object information corresponding to each of the data tables; and
an establishment unit, configured to establish an association relationship between the development object information.

According to a fourth aspect of the present invention, the present invention provides a big data-based device for determining a relationship between development objects, including:
a first counting unit, configured to: count the number of times of mutually calling data tables between development objects in a preset time period, and denote the number of times as the number of times of valid and bidirectional dependence;
a second counting unit, configured to: count the number of bytes of the mutually calling data tables, and denote the number of bytes as the number of bytes of valid and bidirectional dependence;
a first calculation unit, configured to calculate a dependence number-of-times score corresponding to the number of times of valid and bidirectional dependence based on a preset mapping table;
a second calculation unit, configured to calculate a dependence number-of-bytes score corresponding to the number of bytes of valid and bidirectional dependence based on a preset calculation formula; and
a third calculation unit, configured to add the dependence number-of-times score to the dependence number-of-bytes score based on a preset weighting coefficient, to obtain a relationship index between the development objects, where the relationship index is used for representing a relationship strength between the development objects.

According to the foregoing technical solutions, in the big data-based method and device for determining a relationship between development objects provided in the embodiments of the present invention, in a large-scale data scenario of an enterprise, it can be determined whether there is a lineage relationship between data tables, where the lineage relationship is a data generation relationship of directly generating one of the data tables based on one of the data tables; when it is determined that there is the lineage relationship between the data tables, development object information corresponding to each of the data tables is obtained; and at last, an association relationship between the development object information corresponding to the data tables is established based on the data tables having a lineage relationship. Compared with the analysis methods for interpersonal relationship networks and academic relationship networks in the existing technologies, in the present invention, when there is no communications information between people and there is no author's name on an academic paper, with respect to enterprise-data-oriented development objects, an association relationship between the development objects of the enterprise data can be calculated based on a lineage relationship between data and development object information to which the data belongs, so as to resolve the problematic issue of analyzing the dependency relationship between data development objects in a large-scale complex data scenario, and to lay the foundation for an application scenario based on a relationship between development objects.

The foregoing descriptions are merely an overview of the technical solutions of the present invention. To more clearly understand the technical features of the present invention, the technical means may be implemented in accordance with the content of the specification. In addition, to make the foregoing and other objectives, features, and advantages of the present invention more obvious and easier, detailed implementations of the present invention are provided below.

### BRIEF DESCRIPTION OF THE DRAWINGS

Various other advantages and benefits are clear to a person of ordinary skill in the art by reading detailed descriptions of preferred implementations below. The accompanying drawings are merely intended to show the preferred implementations and do not constitute a limitation on the present invention. In the whole accompanying drawings, the same reference numeral is used for indicating the same component. In the accompanying drawings:
FIG. 1 is a schematic flowchart of a big data-based method for determining a relationship between development objects according to the embodiments of the present invention;
FIG. 2 is a schematic diagram after visual output is performed on an association relationship between development object information according to the embodiments of the present invention;
FIG. 3 is a schematic flowchart of another big data-based method for determining a relationship between development objects according to the embodiments of the present invention;
FIG. 4 is a schematic diagram after visual output is performed on a relationship index between development objects according to the embodiments of the present invention;
FIG. 5 is a component block diagram of a big data-based device for determining a relationship between development objects according to the embodiments of the present invention;
FIG. 6 is a component block diagram of another big data-based device for determining a relationship between development objects according to the embodiments of the present invention;
FIG. 7 is a component block diagram of another big data-based device for determining a relationship between development objects according to the embodiments of the present invention; and
FIG. 8 is a component block diagram of another big data-based device for determining a relationship between development objects according to the embodiments of the present invention.

### DETAILED DESCRIPTION

The following describes exemplary embodiments of the present disclosure in more detail with reference to the accompanying drawings. Although the accompanying drawings show the exemplary embodiments of the present disclosure, it will be appreciated that the present disclosure may be implemented in various manners and is not limited by the embodiments described herein. Rather, these embodiments are provided, so that the present disclosure is more thoroughly understood and the scope of the present disclosure is completely conveyed to a person skilled in the art.

As the big data era opens, the enterprise data volume rapidly increases year by year, data-based application scenarios gradually increase, the enterprise data developers also increase, and it becomes very important to understand a relationship and dependency between the developers. However, in a large-scale complex data scenario, it is very difficult to analyze a dependency relationship between data developers, and the relationship between the enterprise data developers has never been sorted out.

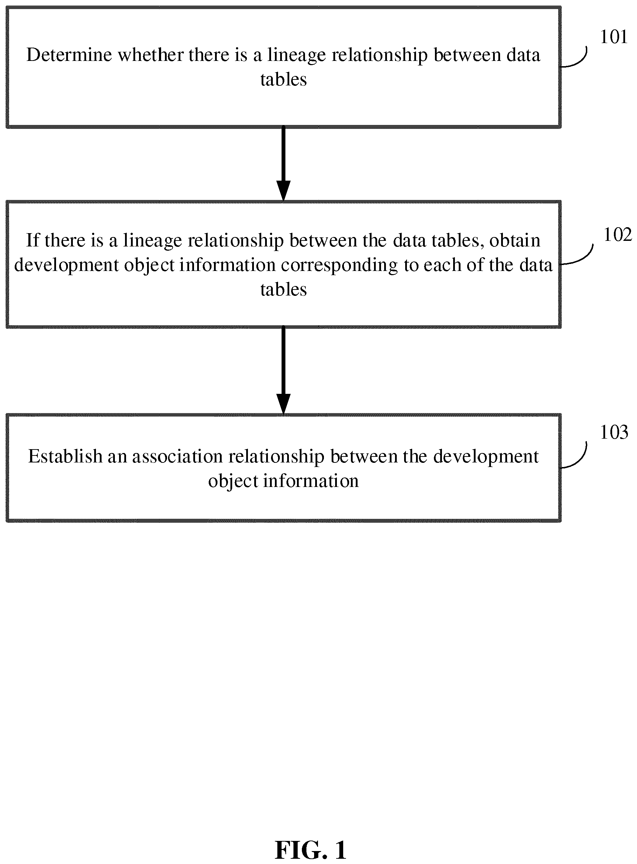

To resolve the foregoing problem, an embodiment of the present invention provides a big data-based method for determining a relationship between development objects, so as to calculate an association relationship between development objects of enterprise data based on a lineage relationship between data and development object information to which the data belongs. As shown in FIG. 1, the method includes the following steps:
101: Determine whether there is a lineage relationship between data tables.

In various service activities of an enterprise, massive data is generated. As the big data application era opens, the massive data usually has an analysis value. In enterprise data, there are innumerable relationships among data. In this embodiment of the present invention, data lineage is abstracted out based on a particular relationship between data. The data lineage may be understood as that if data A is generated based on data B, there is an actual lineage relationship between the data B and the data A. In this embodiment of the present invention, the data may be in a form of a data table. In this embodiment of the present invention, determining a relationship between development objects mainly relies on analyzing data lineage of enterprise data and calculating, in combination with development objects corresponding to data having a lineage relationship, an association relationship between the development objects. Therefore, in this embodiment of the present invention, when a relationship between development objects is calculated based on big data, step 101 first needs to be performed: determining whether there is a lineage relationship between the data tables, where the lineage relationship is a data generation relationship of directly generating another one of the data tables based on one of the data tables.

102: If there is a lineage relationship between the data tables, obtain development object information corresponding to each of the data tables.

Usually, in a generation process of enterprise data, each data table has a corresponding development manager or responsible development department that may be collectively referred to as a development object. In addition, in massive data tables, the lineage relationship described in step 101 also exists between data tables. For a relationship between development objects, an association relationship between the development objects is usually established by using a lineage relationship between data tables that the development objects respectively are responsible for. For example, if most data tables that a development object M is responsible for has a lineage relationship with data tables that a development object N is responsible for, it may be considered that there is a relatively close association relationship between the development object M and the development object N. Based on the foregoing reason, in this embodiment of the present invention, after step 101 is performed, step 102 needs to be selectively performed based on a performing result of step 101: if there is a lineage relationship between the data tables, obtaining the development object information corresponding to each of the data tables.

103: Establish an association relationship between the development object information.

After it is determined that there is the lineage relationship between the data tables in step 101, and the development object information corresponding to the data tables having a lineage relationship is obtained in step 102, step 103 may be performed: establishing the association relationship between the development object information. When the association relationship between the development object information is established, dependency between the data tables that the development objects are respectively responsible for needs to be referred to, and the dependency is converted into a quantifiable association relationship between the development object information. For example, when an association relationship between a development object M and a development object N is established, dependency between data tables a, b, and c that the development object M is responsible for and data tables d, e, and f that the development object N is responsible for need to be referred to. The dependency includes: the number of times of dependency and a dependency data volume between the data tables a, b, and c and the data tables d, e, and f. The number of times of dependency may be understood as: if the data table a is generated based on the data table d, the number of times of dependency is 1; if the data table a is generated based on the data table d, the data table b is generated based on the data table e, and the data table c is generated based on the data table f, the number of times of dependency is 3. The dependency data volume may be understood as: if the data table a is generated based on the data table d, the dependency data volume is a data volume of the data table d; if the data table a is generated based on the data table d, the data table b is generated based on the data table e, and the data table c is generated based on the data table f, the dependency data volume is a sum of data volumes of the data table d, the data table e, and the data table f.

In the big data-based method for determining a relationship between development objects provided in this embodiment of the present invention, in a large-scale data scenario of an enterprise, it can be determined whether there is a lineage relationship between data tables, where the lineage relationship is a data generation relationship of directly generating another one of the data tables based on one of the data tables; when it is determined that there is the lineage relationship between the data tables, development object information corresponding to each of the data tables is obtained; and at last, an association relationship between the development object information corresponding to the data tables is established based on the data tables having a lineage relationship. Compared with the analysis methods for interpersonal relationship networks and academic relationship networks in the existing technologies, in the present invention, when there is no communications information between people and there is no author's name on an academic paper, with respect to enterprise-data-oriented development objects, an association relationship between the development objects of the enterprise data can be calculated based on a lineage relationship between data and development object information to which the data belongs, so as to resolve the problematic issue of analyzing the dependency relationship between data development objects in a large-scale complex data scenario, and to lay the foundation for an application scenario based on a relationship between development objects.

To better understand the method shown in FIG. 1, as the refinement and expansion of the foregoing implementation, the steps in FIG. 1 are described in detail in this embodiment of the present invention.

In this embodiment of the present invention, a lineage relationship between data tables is a data generation relationship of directly generating another one of the data tables based on one of the data tables, and the data table is usually stored in a relationship database system. In a daily service activity process of an enterprise, a database needs to be queried, updated, and managed, and data is accessed from the database. The data usually exists in the form of a data table. When data is queried and a database is managed, a structured query language (SQL) needs to be used. The structured query language is a programming language of a special purpose, and may be used for accessing data in the database and querying, updating, and managing the database. When data is queried, SQL code corresponding to a query operation may be generated. The SQL code is used for recoding which processing logic is performed on data in which data table (that is, an upstream data table) to obtain another data table (that is, a downstream data table). The processing logic includes: collecting statistics on data in some fields in the data table or an operation such as addition, subtraction, multiplication, division, and the like on the data. The SQL code may record table names of the upstream data table and the downstream data table and the processing logic between the upstream data table and the downstream data table. Based on the foregoing reason, in this embodiment of the present invention, when it is determined whether there is a lineage relationship between data tables, structured query language code, that is, SQL code, corresponding to a data processing operation may be analyzed. In a process of analyzing massive SQL code, if it is found that the SQL code has recorded processing logic between data tables, it is determined that there is the lineage relationship between the data tables, and table names of the data tables having a lineage relationship may be further obtained.

In a process of generating enterprise data, each data table has a corresponding development object (for example, a development manager or a responsible development department). Therefore, to help manage massive data tables and clarify a development object to which a data table belongs, when creating a data table, an enterprise assigns attribute information, that is, table information of the data table, to the data table. Table information of each data table records development object information of the data table to which the table information belongs, and by using the table information of the data table, a development object developing the data table may be learned. Therefore, after the SQL code is analyzed to determine the data tables having a lineage relationship, the development object information of each of the data tables having a lineage relationship may be obtained from the table information of each of the data tables having a lineage relationship. It should be noted herein that if the obtained development object information of the data tables having a lineage relationship is the same, it indicates that the data tables having a lineage relationship are developed by the same development object. For the same development object, there is no association relationship. Therefore, if the development object information of the data tables having a lineage relationship is the same, the association relationship between the development object information does not need to be established.

After the development object information of the data tables having a lineage relationship is obtained by using the foregoing manner, the association relationship between the development object information needs to be established based on the data tables of the development object information. For example, a step of establishing the association relationship between the development object information includes:
(1) Count a number of times of mutually calling the data tables between the development objects in a preset time period, and denote the number of times as a number of times of valid and bidirectional dependence.
In a daily service activity of an enterprise, for each developer or development department, a service that the developer or development department is responsible for is adjusted or changed in different time periods. Therefore, an association relationship between development objects is not invariant. In this embodiment of the present invention, the association relationship between the development objects is established based on a lineage relationship between data that the development objects are respectively responsible for. Therefore, in this embodiment of the present invention, the association relationship between the development objects needs to be established based on data having a lineage relationship in a preset time period. First, the number of times of mutually calling the data tables between the development objects in the preset time period needs to be counted, and the number of times is denoted as the number of times of valid and bidirectional dependence. The preset time period may be set based on a service development and operation cycle. If the service development and operation cycle is long and stable, the preset time period may be set to be relatively long, for example, may be set to 30 days, 60 days, or 90 days. For example, the preset time period is set based on an actual service status. The number of times of mutually calling the data tables between the development objects is the number of times of mutually calling, based on all data tables the development objects are respectively responsible for, the data tables between the development objects to which the data tables having a lineage relationship respectively belong. For example, the development objects to which the data tables having a lineage relationship respectively belong is a development object X and a development object Y, the development object X is responsible for a data table 1, a data table 2, a data table 3, and a data table 4, and the development object Y is responsible for a data table 5, a data table 6, a data table 7, and a data table 8. If in the preset time period, the development object X calls each of the data table 5 and the data table 6 once, and the development object Y calls each of the data table 3 and the data table 4 twice, the number of times of mutually calling data tables between the development X and the development object Y in the preset time period is 6, that is, the number of times of valid and bidirectional dependence between the development object X and the development object Y is 6.
(2) Count a number of bytes of the mutually calling the data tables, and denote the number of bytes as a number of bytes of valid and bidirectional dependence.
The counted number of bytes of the mutually calling the data tables is the number of bytes of mutually calling, based on all data tables the development objects are respectively responsible for, the data tables between the development objects to which the data tables having a lineage relationship respectively belong. The foregoing development object X and development object Y are used as an example. The development object X calls each of the data table 5 and the data table 6 once. Therefore, the number of bytes called by the development object X is a sum of the number of bytes of the data table 5 and the number of bytes of the data table 6. The development object Y calls each of the data table 3 and the data table 4 twice. Therefore, the number of bytes called by the development object Y is twice a sum of the number of bytes of the data table 3 and the number of bytes of the data table 4. The number of bytes of mutually calling the data tables is a sum of the number of bytes of calling the data tables by the development object X and the number of bytes of calling the data tables by the development object Y, and may be denoted as the number of bytes of valid and bidirectional dependence. It should be noted herein that for the case in which the development object Y calls each of the data table 3 and the data table 4 twice, when the number of bytes of calling the data tables by the development object Y is counted, deduplication may be performed in this embodiment of the present invention, and the number of bytes of the data table 3 and the number of bytes of the data table 4 are directly calculated once. However, as described above, when the number of bytes of calling the data tables by the development object Y is counted, deduplication is not performed, and the number of bytes of the data table 3 and the number of bytes of the data table 4 are calculated twice. Therefore, the finally obtained association relationship between the development objects is more accurate.
(3) Calculate a dependence number-of-times score corresponding to the number of times of valid and bidirectional dependence based on a preset mapping table.
After the number of times of valid and bidirectional dependence between the development objects to which the data tables having a lineage relationship respectively belong is counted, the dependence number-of-times score corresponding to the number of times of valid and bidirectional dependence may be calculated based on the preset mapping table. The mapping table is used for recording correspondences between dependence number-of-times intervals and single-dependence scores. For example, when the dependence number-of-times score corresponding to the number of times of valid and bidirectional dependence is calculated, a dependence number-of-times interval to which the number of times of valid and bidirectional dependence belongs needs to searched for in the mapping table, and the number of times of valid and bidirectional dependence is multiplied by a single-dependence score corresponding to the dependence number-of-times interval to obtain the dependence number-of-times score. For example, the mapping table is shown in Table 1.

**Table 1**

| Dependence number-of-times interval | Single-dependence score |
|---|---|
| 1-20 times | 1 score |
| 21-100 times | 0.5 score |
| 101-500 times | 0.05 score |
| More than 500 times | 0.001 score |

If the counted number of times of valid and bidirectional dependence is 25, the calculated dependence number-of-times score is 25*0.5=12.5 scores.
(4) Calculate a dependence number-of-bytes score corresponding to the number of bytes of valid and bidirectional dependence based on a preset calculation formula.
After the number of bytes of valid and bidirectional dependence between the development objects to which the data tables having a lineage relationship respectively belong is counted, the dependence number-of-bytes score corresponding to the number of bytes of valid and bidirectional dependence may be calculated based on the preset calculation formula. The calculation formula is performing a preset number of times of extraction operations on the number of bytes of valid and bidirectional dependence, to obtain the dependence number-of-bytes score. A data volume of a data table of enterprise data is usually very large, and a data volume represented by one byte is very small. Therefore, a value of the number of bytes of valid and bidirectional dependence is very large, and the extraction operations need to be performed to obtain the dependence number-of-bytes score having an appropriate value. In this embodiment of the present invention, the 7^{th} root of the number of bytes of valid and bidirectional dependence may be extracted based on a specific status of the enterprise data, to obtain the dependence number-of-bytes score.
(5) Add the dependence number-of-times score to the dependence number-of-bytes score based on a preset weighting coefficient, to obtain a relationship index between the development objects, where the relationship index is used for representing a relationship strength between the development objects.

After the dependence number-of-times score corresponding to the number of times of valid and bidirectional dependence and the dependence number-of-bytes score corresponding to the number of bytes of valid and bidirectional dependence are calculated by using the foregoing manners, the relationship index between the development objects may be calculated based on the dependence number-of-times score and the dependence number-of-bytes score. The relationship index is used for representing a relationship strength between the development objects. In a process of mutually calling the data tables between the development objects, some data that is actually useless may exist in the number of bytes of the called data table. Therefore, when the association relationship between the development objects is determined based on a status of mutually calling the data tables between the development objects, a weight of the number of times of calling the data tables is higher than a weight of the number of bytes of calling the data tables. Therefore, when the relationship index between the development objects is calculated, the dependence number-of-times score and the dependence number-of-bytes score may be added based on the preset weighting coefficient, to obtain the relationship index between the development objects. For example, if the contribution ratio of the dependence number-of-times score to the dependence number-of-bytes score for determining the relationship index between the development objects is approximately 6:4, weighting coefficients of the dependence number-of-times score and the dependence number-of-bytes score are respectively 0.6 and 0.4, and the relationship index between the development objects = the dependence number-of-times score * 0.6 + the dependence number-of-bytes score * 0.4.

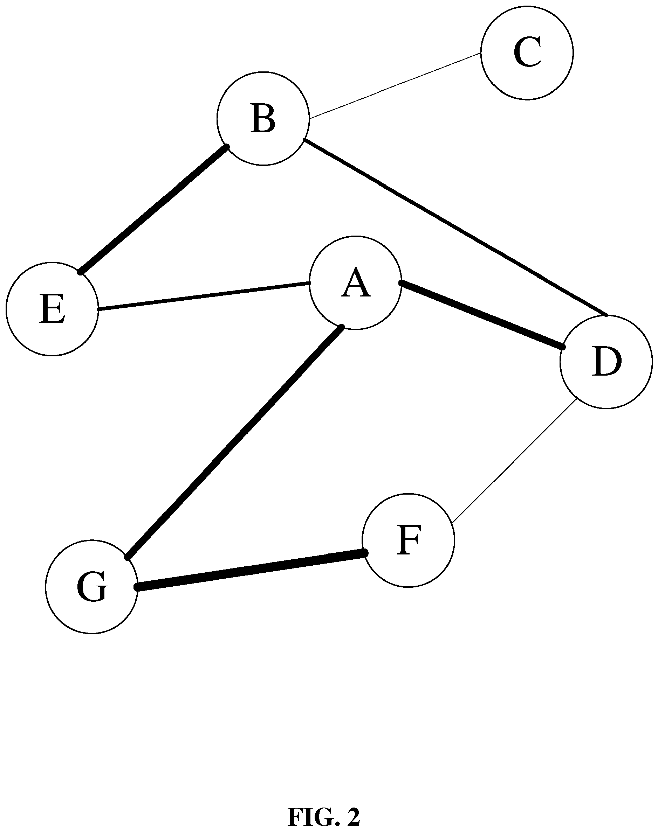

After the relationship strength between the development object information is obtained by using the foregoing manner, visual output may be performed on the association relationship between the development object information. For example, as shown in FIG. 2, the development objects to which the data tables having a lineage relationship belong may be connected by using a connection line, and the thickness of the connection line is adjusted based on the relationship strength (the value of the relationship index) between the development objects. A thicker connection line indicates a stronger association relationship between the development objects, and a thinner connection line indicates a weaker association relationship between the development objects. The development object in the foregoing embodiment may include both an individual development object such as a developer and a development manager, and an organizational development object such as a development department, a development project group, and a development team. Regardless of the individual development object or the organizational development object, a method for calculating the relationship index therebetween is the same as the calculation method in this embodiment of the present invention, while counting of each calculation factor is a summary based on an individual or an organization.

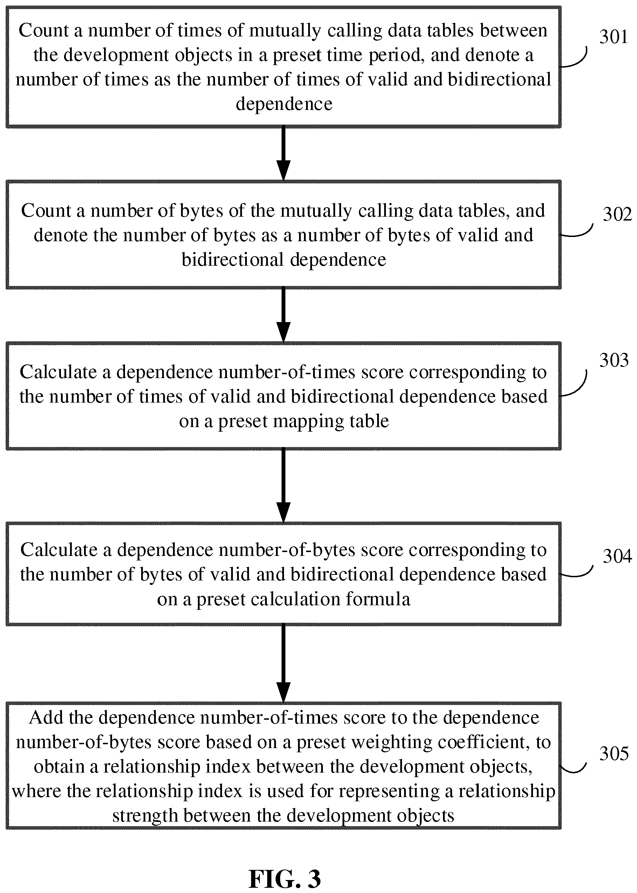

It should be noted herein that simple algorithms are provided when the number of times of mutually calling the data tables between the development objects in the preset time period is counted and denoted as the number of times of valid and bidirectional dependence and when the number of bytes of mutually calling the data tables is counted and denoted as the number of bytes of valid and bidirectional dependence. However, the data tables need to be called in both a development process and a production process of a service. Therefore, to more accurately count the number of times of valid and bidirectional dependence and the number of bytes of valid and bidirectional dependence to obtain a more accurate association relationship between the development objects, an embodiment of the present invention further provides a big data-based method for determining a relationship between development objects. As shown in FIG. 3, the method includes the following steps:
301: Count the number of times of mutually calling data tables between development objects in a preset time period, and denote the number of times as the number of times of valid and bidirectional dependence.
302: Count the number of bytes of the mutually calling data tables, and denote the number of bytes as the number of bytes of valid and bidirectional dependence.
303: Calculate a dependence number-of-times score corresponding to the number of times of valid and bidirectional dependence based on a preset mapping table.
304: Calculate a dependence number-of-bytes score corresponding to the number of bytes of valid and bidirectional dependence based on a preset calculation formula.
305: Add the dependence number-of-times score to the dependence number-of-bytes score based on a preset weighting coefficient, to obtain a relationship index between the development objects, where the relationship index is used for representing a relationship strength between the development objects.

An exemplary performing process of the steps in FIG. 3 is described in the foregoing step of "establishing an association relationship between the development object information", and details are not described herein again. However, to more accurately count the number of times of valid and bidirectional dependence and the number of bytes of valid and bidirectional dependence to obtain a more accurate association relationship between the development objects, the number of times of valid and bidirectional dependence and the number of bytes of valid and bidirectional dependence may further be obtained by using the following manner in this embodiment of the present invention.
(1) Count a number of times of mutually calling the data tables between the development objects and a number of data-table bytes of mutually calling the data tables in a development environment, and respectively denote the number of times and the number of bytes as a number of times of development-environment dependence and a number of bytes of development-environment dependence.
   In a process of mutually calling the data tables between the development objects, calling the data tables in the development environment and calling the data tables in a production environment exist. The calling the data tables in the development environment is calling the data tables between the development objects in environments such as service code development, operation environment setup, code compilation, and code debugging. The number of times of mutually calling the data tables between the development objects in the development environment may be denoted as the number of times of development-environment dependence, and the number of bytes of mutually calling the data tables between the development objects in the development environment may be denoted as the number of bytes of development-environment dependence.
(2) Count a number of times of mutually calling the data tables between the development objects and a number of data-table bytes of mutually calling the data tables in a production environment, and respectively denote the number of times and the number of bytes as a number of times of production-environment dependence and a number of bytes of production-environment dependence.
   In a process of mutually calling the data tables between the development objects, calling the data tables in the development environment and calling the data tables in the production environment exist. The calling the data tables in the production environment is calling data tables between the development objects in an environment in which a normal operation is performed after processes such as service code development, compilation, and debugging are completed. The number of times of mutually calling the data tables between the development objects in the production environment may be denoted as the number of times of production-environment dependence, and the number of bytes of mutually calling the data tables between the development objects in the production environment may be denoted as the number of bytes of production-environment dependence.
(3) Count the number of times and the number of data-table bytes of call errors occurring during the mutually calling the data tables between the development objects, and respectively denote the number of times and the number of bytes as the number of times of faults and the number of bytes of faults.
   In a process of mutually calling the data tables between the development objects, a data table call error situation may inevitably exist. The call error of the data table includes the following several cases: (a) a called data table is erroneous, which results in no valid relationship existing between the called data table and a caller in a real case; (b) a call operation is erroneous, that is, code used when a data table is called is erroneous, causing mismatching between a called data table and a data table actually required by a caller, and consequently resulting in no valid relationship existing between the called data table and the caller. Therefore, when the number of times of mutually calling the data tables between the development objects and the number of bytes of mutually calling the data tables are counted, if any one of the foregoing cases exists, the number of times of calling the data tables in these cases is denoted as the number of times of faults, and the number of bytes of a called data table is denoted as the number of bytes of faults. Similar to the foregoing method for counting the number of bytes of mutually calling the data tables, when the number of bytes of faults is counted, if the same erroneous data table is called for a plurality of times, the erroneous data table may be deduplicated when the number of bytes of faults is counted, and the number of bytes of the data table is calculated once to obtain the number of bytes of faults. Certainly, deduplication may not be performed. The number of bytes of the data table is calculated for a plurality of times to obtain the number of bytes of faults. A finally obtained association relationship between the development objects may be more accurate without using deduplication. The number of times of faults and the number of bytes of faults that are counted above are usually considered as invalid calls between the data tables.
(4) Add the number of times of development-environment dependence to the number of times of production-environment dependence, and subtract the number of times of faults, to obtain the number of times of valid and bidirectional dependence; and aggregate the number of bytes of development-environment dependence and the number of bytes of production-environment dependence, and subtract the number of bytes of faults, to obtain the number of bytes of valid and bidirectional dependence.

It should be noted herein that the development environment may be usually not as stable as the production environment in a service activity process of an enterprise. Therefore, a dependency relationship between the data tables in the development environment needs to be discounted to some extent. Further, in another implementation, the number of times of development-environment dependence counted based on the foregoing step may be further multiplied by a preset first discount rate, and the number of bytes of development-environment dependence is multiplied by a preset second discount rate. The first discount rate may be the same as or different from the second discount rate. For example, if the first discount rate is 70%, the number of times of valid and bidirectional dependence = the number of times of development-environment dependence * 0.7 + the number of times of production-environment dependence - the number of times of faults. If the second discount rate is also 70%, the number of bytes of valid and bidirectional dependence = the number of bytes of development-environment dependence * 0.7 + the number of bytes of production-environment dependence - the number of bytes of faults.

Further, there is a plurality of call statuses of the data tables between the development objects. Therefore, there is a plurality of values of the calculated dependence number-of-times score and dependence number-of-bytes score between the development objects. When the association relationship between the development objects is established, the relationship index between the development objects is obtained based on the dependence number-of-times score and the dependence number-of-bytes score between the development objects, and the relationship index is used for representing a relationship strength between the development objects. Therefore, to standardize the association relationship between the development objects and prevent the association relationship from changing as the dependence number-of-times score and the dependence number-of-bytes score vary, in this embodiment of the present invention, the dependence number-of-times score, the dependence number-of-bytes score, and the relationship index between the development objects may further be defined. For example, a first preset score, a second preset score, and a third preset score may be preset. When the dependence number-of-times score exceeds the first preset score, the first preset score is determined as the dependence number-of-times score. When the dependence number-of-bytes score exceeds the second preset score, the second preset score is determined as the dependence number-of-bytes score. When the relationship index exceeds the third preset score, the third preset score is determined as the relationship index. For example, if the first preset score is 80 scores, the second preset score is 60 scores, and the third preset score is 100 scores, when the calculated dependence number-of-times score exceeds 80 scores, the 80 scores is directly selected as the finally determined dependence number-of-times score. When the calculated dependence number-of-bytes score exceeds 60 scores, the 60 scores is directly selected as the finally determined dependence number-of-bytes score. In addition, the relationship index between the development objects is calculated by using the finally determined dependence number-of-times score and the finally determined dependence number-of-bytes score. If the obtained relationship index is not greater than 100 scores, the obtained score may be used as the final relationship index between the development objects. If the obtained relationship index is greater than 100 scores, the 100 scores is directly selected as the final relationship index between the development objects.

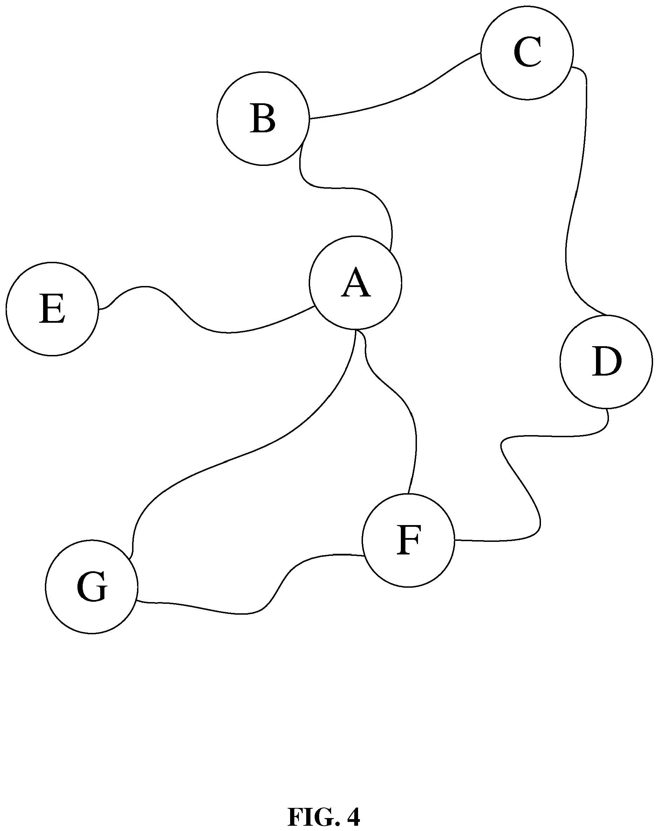

After the relationship index between the development objects is calculated, the relationship index may be used for representing the strength of the association relationship between the development objects. Further, to more directly present the association relationship between the development objects, in this embodiment of the present invention, visual output may be performed on the association relationship between the development objects. For example, the visual output may include: connecting, by using a connection line, the development objects to which the data tables having a lineage relationship belong, and denoting the calculated relationship index between the development objects in the connection line. Further, the thickness of the connection line may be further adjusted based on the value of the relationship index. A thicker connection line indicates a stronger association relationship between the development objects. In addition, as shown in FIG. 4, a fault rate may be calculated by using the number of times of faults or the number of bytes of faults, and the fluctuation amplitude of the connection line is adjusted based on the value of the fault rate. A larger fluctuation amplitude of a connection line indicates a more unstable association relationship between the development objects. The fault rate = the number of times of faults / (the number of times of development-environment dependence + the number of times of production-environment dependence); or the fault rate = the number of bytes of faults / (the number of bytes of development-environment dependence + the number of bytes of production-environment dependence).

It should be noted herein that the development object in the foregoing various embodiments may include both an individual development object such as a developer and a development manager, and an organizational development object such as a development department, a development project group, and a development team. Regardless of the individual development object or the organizational development object, a method for calculating the relationship index therebetween is the same as the calculation method in this embodiment of the present invention, while counting of each calculation factor is a summary based on an individual or an organization.

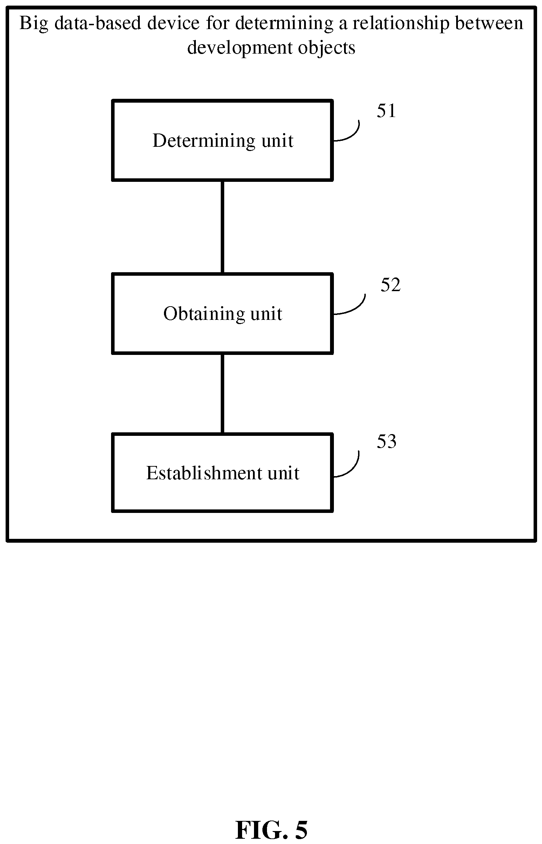

Further, as an implementation of the method shown in FIG. 1, an embodiment of the present invention provides a big data-based device for determining a relationship between development objects. As shown in FIG. 5, the device includes: a determining unit 51, an obtaining unit 52, and an establishment unit 53.

The determining unit 51 is configured to determine whether there is a lineage relationship between data tables, where the lineage relationship is a data generation relationship of directly generating another one of the data tables based on one of the data tables.

The obtaining unit 52 is configured to: when there is a lineage relationship between the data tables, obtain development object information corresponding to each of the data tables.

The establishment unit 53 is configured to establish an association relationship between the development object information.

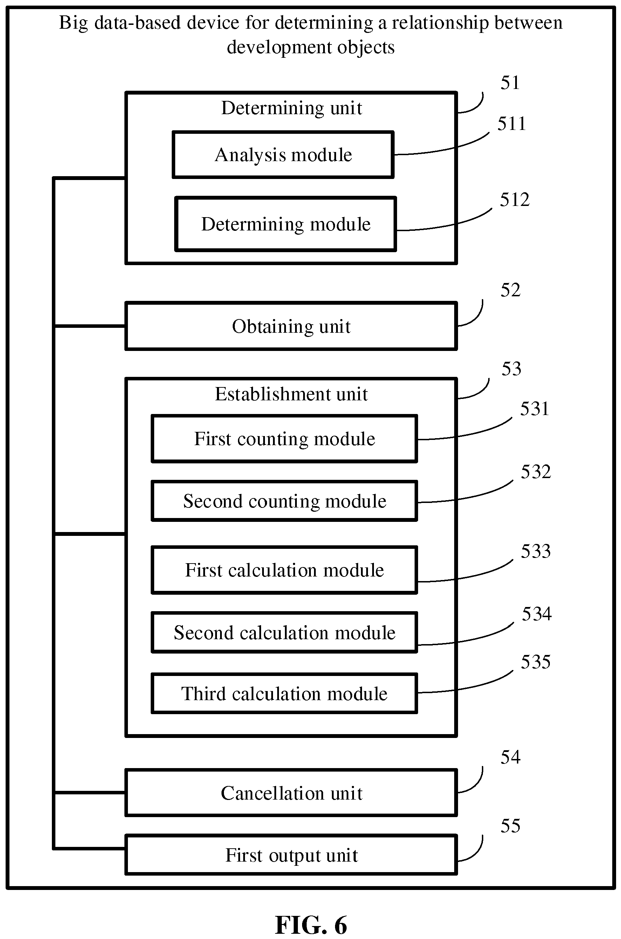

Further, as shown in FIG. 6, the determining unit 51 includes:
an analysis module 511, configured to analyze structured query language code corresponding to a data processing operation; and
a determining module 512, configured to: if the structured query language code has recorded processing logic between the data tables, determine that there is the lineage relationship between the data tables.

Further, the obtaining unit 52 is configured to obtain the development object information from table information of the data tables.

Further, as shown in FIG. 6, the device further includes:
a cancellation unit 54, configured to: when the obtained development object information is the same, cancel establishing the association relationship between the development object information.

Further, as shown in FIG. 6, the establishment unit 53 includes:
a first counting module 531, configured to: count a number of times of mutually calling the data tables between the development objects in a preset time period, and denote the number of times as a number of times of valid and bidirectional dependence;
a second counting module 532, configured to: count a number of bytes of the mutually calling the data tables, and denote the number of bytes as a number of bytes of valid and bidirectional dependence;
a first calculation module 533, configured to calculate a dependence number-of-times score corresponding to the number of times of valid and bidirectional dependence based on a preset mapping table;
a second calculation module 534, configured to calculate a dependence number-of-bytes score corresponding to the number of bytes of valid and bidirectional dependence based on a preset calculation formula; and
a third calculation module 535, configured to add the dependence number-of-times score to the dependence number-of-bytes score based on a preset weighting coefficient, to obtain a relationship index between the development objects, where the relationship index is used for representing a relationship strength between the development objects.

Further, as shown in FIG. 6, the device further includes:
a first output unit 55, configured to perform visual output on the association relationship between the development object information.

Further, the development object in the development object information obtained by the obtaining unit 52 includes an individual development object and an organizational development object.

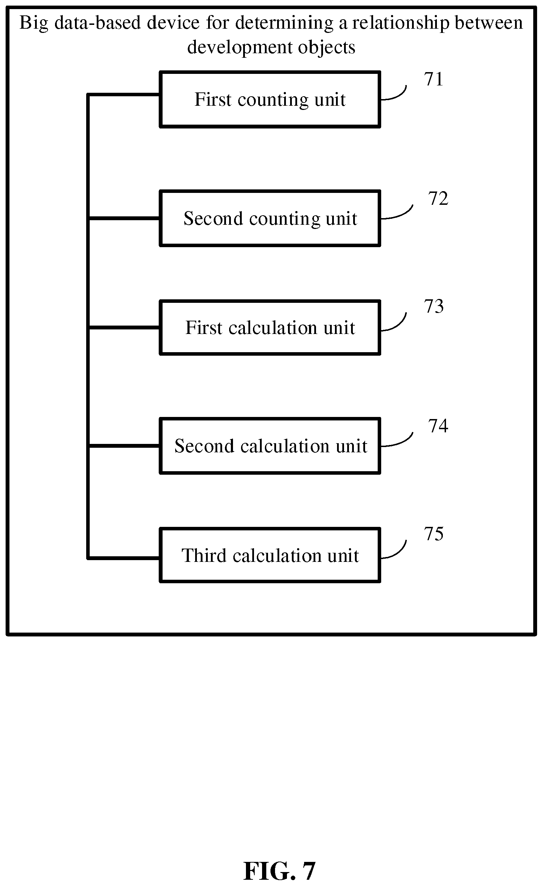

Further, as an implementation of the method shown in FIG. 3, an embodiment of the present invention provides a big data-based device for determining a relationship between development objects. As shown in FIG. 7, the device includes: a first counting unit 71, a second counting unit 72, a first calculation unit 73, a second calculation unit 74, and a third calculation unit 75.

The first counting unit 71 is configured to: count the number of times of mutually calling data tables between development objects in a preset time period, and denote the number of times as the number of times of valid and bidirectional dependence.

The second counting unit 72 is configured to: count the number of bytes of the mutually calling data tables, and denote the number of bytes as the number of bytes of valid and bidirectional dependence.

The first calculation unit 73 is configured to calculate a dependence number-of-times score corresponding to the number of times of valid and bidirectional dependence based on a preset mapping table.

The second calculation unit 74 is configured to calculate a dependence number-of-bytes score corresponding to the number of bytes of valid and bidirectional dependence based on a preset calculation formula.

The third calculation unit 75 is configured to add the dependence number-of-times score to the dependence number-of-bytes score based on a preset weighting coefficient, to obtain a relationship index between the development objects, where the relationship index is used for representing a relationship strength between the development objects.

Further, the first counting unit 71 is configured to: count the number of times of mutually calling the data tables between the development objects in a development environment, and denote the number of times of mutually calling the data tables between the development objects in the development environment as a number of times of development-environment dependence. The first counting unit 71 is further configured to: count the number of times of mutually calling the data tables between the development objects in a production environment, and denote the number of times of mutually calling the data tables between the development objects in the production environment as a number of times of production-environment dependence. The first counting unit 71 is further configured to: count a number of times of call errors occurring during the mutually calling the data tables between the development objects, and denote the number of times of the call errors occurring during the mutually calling the data tables between the development objects as a number of times of faults. The first counting unit 71 is further configured to: add the number of times of development-environment dependence to the number of times of production-environment dependence, and subtract the number of times of faults, to obtain the number of times of valid and bidirectional dependence.

Further, the first counting unit 71 is further configured to multiply the number of times of development-environment dependence by a preset first discount rate.

Further, the second counting unit 72 is configured to: count a number of data-table bytes of mutually calling the data tables between the development objects in a development environment, and denote the number of bytes as a number of bytes of development-environment dependence. The second counting unit 72 is further configured to: count a number of data-table bytes of mutually calling the data tables between the development objects in a production environment, and denote the number of bytes as a number of bytes of production-environment dependence. The second counting unit 72 is further configured to: count the number of data-table bytes of call errors occurring during the mutually calling the data tables between the development objects, and denote the number of bytes of call errors occurring during the mutually calling the data tables between the development objects as the number of bytes of faults. The second counting unit 72 is further configured to: add the number of bytes of development-environment dependence to the number of bytes of production-environment dependence, and subtract the number of bytes of faults, to obtain the number of bytes of valid and bidirectional dependence.

Further, the second counting unit 72 is further configured to multiply the number of bytes of development-environment dependence by a preset second discount rate.

Further, the mapping table used by the first calculation unit 73 is used for recording correspondences between dependence number-of-times intervals and single-dependence scores. The first calculation unit 73 is configured to search the mapping table for a dependence number-of-times interval to which the number of times of valid and bidirectional dependence belongs. The first calculation unit 73 is further configured to multiply the number of times of valid and bidirectional dependence by a single-dependence score corresponding to the dependence number-of-times interval, to obtain the dependence number-of-times score.

Further, the second calculation unit 74 is configured to perform a preset number of times of extraction operations on the number of byte of valid and bidirectional dependence, to obtain the dependence number-of-bytes score.

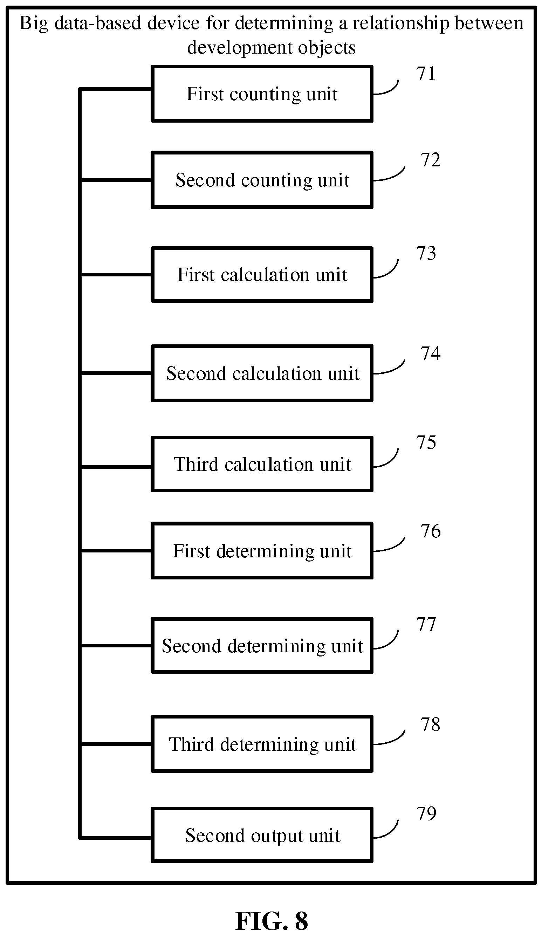

Further, as shown in FIG. 8, the device further includes:
a first determining unit 76, configured to: when the dependence number-of-times score exceeds a first preset score, determine the first preset score as the dependence number-of-times score;
a second determining unit 77, configured to: when the dependence number-of-bytes score exceeds a second preset score, determine the second preset score as the dependence number-of-bytes score; and
a third determining unit 78, configured to: when the relationship index exceeds a third preset score, determine the third preset score as the relationship index.

Further, as shown in FIG. 8, the device further includes:
a second output unit 79, configured to perform visual output on the relationship index between the development objects.

Further, the development object in the relationship between the development objects that is calculated by the device includes an individual development object or an organizational development object.

In the big data-based device for determining a relationship between development objects provided in this embodiment of the present invention, in a large-scale data scenario of an enterprise, it can be determined whether there is a lineage relationship between data tables, where the lineage relationship is a data generation relationship of directly generating another one of the data tables based on one of the data tables; when it is determined that there is the lineage relationship between the data tables, development object information corresponding to each of the data tables is obtained; and at last, an association relationship between the development object information corresponding to the data tables is established based on the data tables having a lineage relationship. Compared with the analysis methods for interpersonal relationship networks and academic relationship networks in the existing technologies, in the present invention, when there is no communications information between people and there is no author's name on an academic paper, with respect to enterprise-oriented development objects, an association relationship between the development objects of the enterprise data can be calculated based on a lineage relationship between data and development object information to which the data belongs, so as to resolve the problematic issue of analyzing the dependency relationship between data development objects in a large-scale complex data scenario, and to lay the foundation for an application scenario based on a relationship between development objects.

In the foregoing embodiments, the descriptions of the embodiments have respective focuses. For a part that is not described in detail in an embodiment, refer to related descriptions in other embodiments.

It will be appreciated that related features in the foregoing method and device may be mutually referred to. In addition, "first", "second", and the like in the foregoing embodiments are used for distinguishing between the embodiments and do not represent advantages and disadvantages of the embodiments.

A person skilled in the art may clearly understand that, for the purpose of convenience and brief description, for a specific working process of the foregoing system, device, and unit, refer to a corresponding process in the foregoing method embodiment, and details are not described herein again.

Algorithms and displaying provided herein are not inherently related to a particular computer, a virtual system, or another device. Various general purpose systems may also be used together with teachings herein. In accordance with the foregoing descriptions, a structure required for constructing such system is obvious. In addition, the present invention is not specific to any particular programming language. It should be understood that the content in the present invention described herein may be implemented by using various programming languages, and the foregoing description of the particular language is intended to disclose an optimal implementation of the present invention.

Lots of specific details are described in the specification provided herein. However, it will be appreciated that the embodiments of the present invention may be implemented in a case without these specific details. In some examples, known methods, structures, and technologies are not disclosed in detail, so as not to mix up understanding on the specification.

Similarly, it should be appreciated that to simplify the present disclosure and help to understand one or more of the inventive aspects, in the foregoing descriptions of the exemplary embodiments of the present invention, features of the present invention are sometimes grouped into a single embodiment or figure, or descriptions thereof. However, the methods in the present disclosure should not be construed as reflecting the following intention: that is, the present invention claimed to be protected is required to have more features than those clearly set forth in each claim. Or rather, as reflected in the following claims, the inventive aspects aim to be fewer than all features of a single embodiment disclosed above. Therefore, the claims complying with a specific implementation are definitely combined into the specific implementation, and each claim is used as a single embodiment of the present invention.

Those persons skilled in the art may understand that modules in the device in the embodiments may be adaptively changed and disposed in one or more devices different from that in the embodiments. Modules, units, or components in the embodiments may be combined into one module, unit, or component, and moreover, may be divided into a plurality of sub-modules, subunits, or subcomponents. Unless at least some of such features and/or processes or units are mutually exclusive, all features disclosed in this specification (including the accompanying claims, abstract, and drawings) and all processes or units in any disclosed method or device may be combined by using any combination. Unless otherwise definitely stated, each feature disclosed in this specification (including the accompanying claims, abstract, and drawings) may be replaced with a replacement feature providing a same, an equivalent, or a similar objective.

In addition, a person skilled in the art may understand that although some embodiments described herein include some features included in other embodiments instead of other features, a combination of features in different embodiments means that the combination falls within the scope of the present invention and forms a different embodiment. For example, in the following claims, any one of the embodiments claimed to be protected may be used by using any combination manner.

The component embodiments of the present invention may be implemented by using hardware, may be implemented by using software modules running on one or more processors, or may be implemented by using a combination thereof. A person skilled in the art should understand that some or all functions of some or all components according to the invention name (for example, an apparatus for determining a link level in a website) of the embodiments of the present invention may be implemented by using a microprocessor or a digital signal processor (DSP) in practice. The present invention may further be implemented as a device or device program (for example, a computer program and a computer program product) configured to perform some or all of the methods described herein. Such program for implementing the present invention may be stored on a computer-readable medium, or may have one or more signal forms. Such signal may be obtained through downloading from an Internet website, may be provided from a carrier signal, or may be provided in any other forms.

It should be noted that the foregoing embodiments are descriptions of the present invention instead of a limitation on the present invention, and a person skilled in the art may design a replacement embodiment without departing from the scope of the accompanying claims. In the claims, any reference symbol located between brackets should not constitute a limitation on the claims. The word "comprise" does not exclude an element or a step not listed in the claims. The word "a" or "one" located previous to an element does not exclude existence of a plurality of such elements. The present invention may be implemented by hardware including several different elements and an appropriately programmed computer. In the unit claims listing several devices, some of the devices may be specifically presented by using the same hardware. Use of the words such as "first", "second", and "third" does not indicate any sequence. These words may be construed as names.

## Claims

1. A big data-based method for determining a relationship between development objects, wherein the method comprises:
determining whether there is a lineage relationship between data tables, wherein the lineage relationship is a data generation relationship of directly generating another one of the data tables based on one of the data tables;
if there is a lineage relationship between the data tables, obtaining development object information corresponding to each of the data tables; and
establishing an association relationship between the development object information.

2. The method according to claim 1, wherein the determining whether there is a lineage relationship between data tables comprises:
analyzing structured query language code corresponding to a data processing operation; and
if the structured query language code has recorded processing logic between the data tables, determining that there is the lineage relationship between the data tables.

3. The method according to claim 1, wherein the obtaining development object information corresponding to each of the data tables comprises:
obtaining the development object information from table information of the data tables.

4. The method according to claim 1, wherein if the obtained development object information is the same, cancelling establishing the association relationship between the development object information.

5. The method according to any one of claims 1 to 4, wherein the establishing an association relationship between the development object information further comprises:
counting a number of times of mutually calling the data tables between the development objects in a preset time period, and denoting the number of times as a number of times of valid and bidirectional dependence;
counting a number of bytes of the mutually calling the data tables, and denoting the number of bytes as a number of bytes of valid and bidirectional dependence;
calculating a dependence number-of-times score corresponding to the number of times of valid and bidirectional dependence based on a preset mapping table;
calculating a dependence number-of-bytes score corresponding to the number of bytes of valid and bidirectional dependence based on a preset calculation formula; and
adding the dependence number-of-times score to the dependence number-of-bytes score based on a preset weighting coefficient, to obtain a relationship index between the development objects, wherein the relationship index is used for representing a relationship strength between the development objects.

6. The method according to any one of claims 1 to 5, wherein the method further comprises:
performing visual output on the association relationship between the development object information.

7. The method according to any one of claims 1 to 6, wherein the development object comprises:
an individual development object and an organizational development object.

8. A big data-based method for determining a relationship between development objects, wherein the method comprises:
counting a number of times of mutually calling data tables between development objects in a preset time period, and denoting the number of times as a number of times of valid and bidirectional dependence;
counting a number of bytes of the mutually calling data tables, and denoting the number of bytes as a number of bytes of valid and bidirectional dependence;
calculating a dependence number-of-times score corresponding to the number of times of valid and bidirectional dependence based on a preset mapping table;
calculating a dependence number-of-bytes score corresponding to the number of bytes of valid and bidirectional dependence based on a preset calculation formula; and
adding the dependence number-of-times score to the dependence number-of-bytes score based on a preset weighting coefficient, to obtain a relationship index between the development objects, wherein the relationship index is used for representing a relationship strength between the development objects.

9. The method according to claim 8, wherein the counting a number of times of mutually calling data tables between development objects in a preset time period, and denoting the number of times as a number of times of valid and bidirectional dependence comprises:
counting the number of times of mutually calling the data tables between the development objects in a development environment, and denoting the number of times of mutually calling the data tables between the development objects in the development environment as a number of times of development-environment dependence;
counting the number of times of mutually calling the data tables between the development objects in a production environment, and denoting the number of times of mutually calling the data tables between the development objects in the production environment as a number of times of production-environment dependence;
counting a number of times of call errors occurring during the mutually calling the data tables between the development objects, and denoting the number of times of the call errors occurring during the mutually calling the data tables between the development objects as the number of times of faults; and
adding the number of times of development-environment dependence to the number of times of production-environment dependence, and subtracting the number of times of faults, to obtain the number of times of valid and bidirectional dependence.

10. The method according to claim 9, wherein the method further comprises: multiplying the number of times of development-environment dependence by a preset first discount rate.

11. The method according to claim 8, wherein the counting a number of bytes of the mutually calling data tables, and denoting the number of bytes as a number of bytes of valid and bidirectional dependence comprises:
counting a number of data-table bytes of mutually calling the data tables between the development objects in a development environment, and denoting the number of data-table bytes as a number of bytes of development-environment dependence;
counting a number of data-table bytes of mutually calling the data tables between the development objects in a production environment, and denoting the number of data-table bytes as a number of bytes of production-environment dependence;
counting the number of data-table bytes of call errors occurring during the mutually calling the data tables between the development objects, and denoting the number of data-table bytes of call errors occurring during the mutually calling the data tables between the development objects as the number of bytes of faults; and
adding the number of bytes of development-environment dependence to the number of bytes of production-environment dependence, and subtracting the number of bytes of faults, to obtain the number of bytes of valid and bidirectional dependence.

12. The method according to claim 11, wherein the method further comprises:
multiplying the number of bytes of development-environment dependence by a preset second discount rate.

13. The method according to claim 8, wherein:
the mapping table is used for recording correspondences between dependence number-of-times intervals and single-dependence scores; and
the calculating a dependence number-of-times score corresponding to the number of times of valid and bidirectional dependence based on a preset mapping table comprises:
searching the mapping table for a dependence number-of-times interval to which the number of times of valid and bidirectional dependence belongs; and
multiplying the number of times of valid and bidirectional dependence by a single-dependence score corresponding to the dependence number-of-times interval, to obtain the dependence number-of-times score.

14. The method according to claim 8, wherein the calculating a dependence number-of-bytes score corresponding to the number of bytes of valid and bidirectional dependence based on a preset calculation formula comprises:
performing a preset number of times of extraction operations on the number of bytes of valid and bidirectional dependence, to obtain the dependence number-of-bytes score.

15. The method according to claim 8, wherein the method further comprises:
if the dependence number-of-times score exceeds a first preset score, determining the first preset score as the dependence number-of-times score;
if the dependence number-of-bytes score exceeds a second preset score, determining the second preset score as the dependence number-of-bytes score; and
if the relationship index exceeds a third preset score, determining the third preset score as the relationship index.

16. The method according to any one of claims 8 to 15, wherein the method further comprises:
performing visual output on the relationship index between the development objects.

17. The method according to any one of claims 8 to 16, wherein the development object comprises:
an individual development object and an organizational development object.

18. A big data-based device for determining a relationship between development objects, wherein the device comprises:
a determining unit, configured to determine whether there is a lineage relationship between data tables, wherein the lineage relationship is a data generation relationship of directly generating another one of the data tables based on one of the data tables;
an obtaining unit, configured to: when there is a lineage relationship between the data tables, obtain development object information corresponding to each of the data tables; and
an establishment unit, configured to establish an association relationship between the development object information.

19. The device according to claim 18, wherein the determining unit comprises: an analysis module, configured to analyze structured query language code corresponding to a data processing operation; and
a determining module, configured to: if the structured query language code has recorded processing logic between the data tables, determine that there is the lineage relationship between the data tables.

20. The device according to claim 18, wherein the obtaining unit is configured to obtain the development object information from table information of the data tables.

21. The device according to claim 18, wherein the device further comprises:
a cancellation unit, configured to: when the obtained development object information is the same, cancel establishing the association relationship between the development object information.

22. The device according to any one of claims 18 to 21, wherein the establishment unit comprises:
a first counting module, configured to: count a number of times of mutually calling the data tables between the development objects in a preset time period, and denote the number of times as a number of times of valid and bidirectional dependence;
a second counting module, configured to: count a number of bytes of the mutually calling the data tables, and denote the number of bytes as a number of bytes of valid and bidirectional dependence;
a first calculation module, configured to calculate a dependence number-of-times score corresponding to the number of times of valid and bidirectional dependence based on a preset mapping table;
a second calculation module, configured to calculate a dependence number-of-bytes score corresponding to the number of bytes of valid and bidirectional dependence based on a preset calculation formula; and
a third calculation module, configured to add the dependence number-of-times score to the dependence number-of-bytes score based on a preset weighting coefficient, to obtain a relationship index between the development objects, wherein the relationship index is used for representing a relationship strength between the development objects.

23. The device according to any one of claims 18 to 22, wherein the device further comprises:
a first output unit, configured to perform visual output on the association relationship between the development object information.

24. The device according to any one of claims 18 to 23, wherein the development object in the development object information obtained by the obtaining unit comprises an individual development object and an organizational development object.

25. A big data-based device for determining a relationship between development objects, wherein the device comprises:
a first counting unit, configured to: count a number of times of mutually calling data tables between development objects in a preset time period, and denote the number of times as a number of times of valid and bidirectional dependence;
a second counting unit, configured to: count a number of bytes of the mutually calling data tables, and denote the number of bytes as a number of bytes of valid and bidirectional dependence;
a first calculation unit, configured to calculate a dependence number-of-times score corresponding to the number of times of valid and bidirectional dependence based on a preset mapping table;
a second calculation unit, configured to calculate a dependence number-of-bytes score corresponding to the number of bytes of valid and bidirectional dependence based on a preset calculation formula; and
a third calculation unit, configured to add the dependence number-of-times score to the dependence number-of-bytes score based on a preset weighting coefficient, to obtain a relationship index between the development objects, wherein the relationship index is used for representing a relationship strength between the development objects.

26. The device according to claim 25, wherein:
the first counting unit is configured to: count the number of times of mutually calling the data tables between the development objects in a development environment, and denote the number of times of mutually calling the data tables between the development objects in the development environment as a number of times of development-environment dependence;
the first counting unit is further configured to: count the number of times of mutually calling the data tables between the development objects in a production environment, and denote the number of times of mutually calling the data tables between the development objects in the production environment as a number of times of production-environment dependence;
the first counting unit is further configured to: count a number of times of call errors occurring during the mutually calling the data tables between the development objects, and denote the number of times of the call errors occurring during the mutually calling the data tables between the development objects as the number of times of faults; and
the first counting unit is further configured to: add the number of times of development-environment dependence to the number of times of production-environment dependence, and subtract the number of times of faults, to obtain the number of times of valid and bidirectional dependence.

27. The device according to claim 26, wherein the first counting unit is further configured to multiply the number of times of development-environment dependence by a preset first discount rate.

28. The device according to claim 25, wherein:
the second counting unit is configured to: count a number of data-table bytes of mutually calling the data tables between the development objects in a development environment, and denote the number of data-table bytes as a number of bytes of development-environment dependence;
the second counting unit is configured to: count a number of data-table bytes of mutually calling the data tables between the development objects in a production environment, and denote the number of data-table bytes as a number of bytes of production-environment dependence;
the second counting unit is further configured to: count the number of data-table bytes of call errors occurring during the mutually calling the data tables between the development objects, and denote the number of data-table bytes of call errors occurring during the mutually calling the data tables between the development objects as the number of bytes of faults; and
the second counting unit is further configured to: add the number of bytes of development-environment dependence to the number of bytes of production-environment dependence, and subtract the number of bytes of faults, to obtain the number of bytes of valid and bidirectional dependence.

29. The device according to claim 28, wherein the second counting unit is further configured to multiply the number of bytes of development-environment dependence by a preset second discount rate.

30. The device according to claim 25, wherein:
the mapping table used by the first calculation unit is used for recording correspondences between dependence number-of-times intervals and single-dependence scores; and
the first calculation unit is configured to search the mapping table for a dependence number-of-times interval to which the number of times of valid and bidirectional dependence belongs; and
the first calculation unit is further configured to multiply the number of times of valid and bidirectional dependence by a single-dependence score corresponding to the dependence number-of-times interval, to obtain the dependence number-of-times score.

31. The device according to claim 25, wherein the second calculation unit is configured to perform a preset number of times of extraction operations on the number of bytes of valid and bidirectional dependence, to obtain the dependence number-of-bytes score.

32. The device according to claim 25, wherein the device further comprises:
a first determining unit, configured to: when the dependence number-of-times score exceeds a first preset score, determine the first preset score as the dependence number-of-times score;
a second determining unit, configured to: when the dependence number-of-bytes score exceeds a second preset score, determine the second preset score as the dependence number-of-bytes score; and
a third determining unit, configured to: when the relationship index exceeds a third preset score, determine the third preset score as the relationship index.

33. The device according to any one of claims 25 to 32, wherein the device further comprises:
a second output unit, configured to perform visual output on the relationship index between the development objects.

34. The device according to any one of claims 25 to 33, wherein the development object comprises an individual development object and an organizational development object.
